# EUROPEAN PATENT SPECIFICATION

(11) **EP 1 047 726 B1**
(45) Date of publication and mention of the grant of the patent: **28.08.2002**
(21) Application number: 99901057.2
(22) Date of filing: 15.01.1999
(51) Int. Cl.: C08L 5/14, C08B 37/00, C08B 37/14, C11D 7/00

(54) **POLYSACCHARIDE CONJUGATES CAPABLE OF BINDING TO CELLULOSE**
ZUM BINDEN VON CELLULOSE BEFÄHIGTE POLYSACCHARIDKONJUGATE
CONJUGUES DE POLYSACCHARIDE CAPABLES DE SE LIER A LA CELLULOSE

(30) Priority: 16.01.1998 EP 98300291
(43) Date of publication of application: 02.11.2000
(73) Proprietor: QUEST INTERNATIONAL B.V., 1411 GP Naarden (NL)
(72) Inventor: BERRY, Mark, John, Rushden, Northamptonshire NN10 8LY (GB); GIDLEY, Michael, John, Raunds, Northamptonshire NN9 6SZ (GB); DAVIS, Paul, James, Felmersham, Bedfordshire MK43 7EX (GB)
(74) Representative: Matthews, Heather Clare
(86) International application number: GB9900145
(87) International publication number: WO99036470

(56) References cited:
- EP-A- 0 439 373
- US-A- 2 949 397
- US-A- 3 297 604
- DATABASE WPI Week 8634 Derwent Publications Ltd., London, GB; AN 86-223138 XP002069370 & JP 61 155307 A (LION CORP), 15 July 1986
- DATABASE WPI Week 8631 Derwent Publications Ltd., London, GB; AN 86-201034 XP002069371 & JP 61 133299 A (LILAC KENKYUSHO KK) , 20 June 1986

## Description

### Field of Invention

This invention relates to binding of polysaccharides and concerns a cellulose-binding polysaccharide conjugate, products including the polysaccharide conjugate, and targeting methods using the polysaccharide conjugate. In the context of the invention the term "polysaccharide" is intended to cover polysaccharides and oligosaccharides, and references to "polysaccharide" and "polysaccharide conjugate" should be construed accordingly.

### Background to the Invention

It is known that various naturally occurring polysaccharides such as pea xyloglucan, tamarind seed xyloglucan, etc bind to cellulose by a polysaccharide:polysaccharide interaction; indeed this binding ability is important in the functioning of plant cell walls.

The paper by Hayashi et al entitled "Pea Xyloglucan and Cellulose" in Plant Physiol. (1987) 83, 384-389 describes investigations of binding of pea xyloglucan to cellulose, using fluorescein-labelled xyloglucan prepared by treating xyloglucan with cyanogen bromide (CNBr) and incubating with fluoresceinamine, and also using radioiodinated xyloglucan prepared by reaction of ¹²⁵I with the fluorescein moiety on xyloglucan. These labels were used to trace the binding of the polysaccharide and are among the smallest molecular label entities known.

The present invention is based on the surprising discovery that polysaccharides with much larger attached entities than those used by Hayashi et al can still bind rapidly with high efficiency to cellulose by polysaccharide:polysaccharide interaction. This is surprising because binding occurs at multiple sites along the backbones of the polysaccharides, rather than at a single binding site as with antibody-antigen interactions, and it would have been predicted that binding would have been disrupted by the attachment of large entities to cellulose-binding polysaccharides. The invention thus opens up the possibility of using polysaccharides to target attached particles to cellulose, eg in fabric, paper, etc.

JP 61155307 discloses silica particles containing absorbed oil. The surface of the silica is coated with a water-soluble polymer such as a natural polysaccharide, protein or synthetic polymer.

### Summary of the Invention

In one aspect the present invention provides a polysaccharide conjugate comprising a polysaccharide selected from xyloglucans, glucomannans, mannans, galactomannans, β(1-3), (1-4) glucan and the xylan family incorporating glucurono-, arabino-, and glucuronoarabinoxylan, which is chemically or physically attached to a particle carrying perfume, the polysaccharide conjugate being capable of binding to cellulose.

The polysaccharide may be one that binds naturally to cellulose or has been derivatised or otherwise modified to bind to cellulose. The polysaccharide may be naturally occurring or synthetic.

The polysaccharide has a 1-4 linked β glycan (generalised sugar) backbone structure, which is stereochemically compatible with cellulose, such as a glucan backbone (consisting of β1-4 linked glucose residues), a mannan backbone (consisting of β1-4 linked mannose residues) or a xylan backbone (consisting of β1-4 linked xylose residues). The polysaccharide is therefore selected from xyloglucans, glucomannans, mannans, galactomannans, β (1-3), (1-4) glucan and the xylan family incorporating glucurono-, arabino- and glucuronoarabinoxylan. See "Physiology and Biochemistry of Plant Cell Walls" (1990) by C Brett and K Waldron for a discussion of these materials.

The minimum chain length requirement for cellulose oligomers to bind to cellulose is 4 glucose units. For xyloglucans, the side chains make the binding less efficient and 12 backbone glucose units (ie. about 25 total sugar units) are required for binding to cellulose. Structural considerations suggest galactomannans are intermediate in binding efficiency, and about 6 to 8 backbone residues are expected to be required for binding to cellulose. The polysaccharide should thus have at least 4, and preferably at least 10, backbone residues, which are preferably β1-4 linked.

Naturally occurring polysaccharides that bind rapidly and strongly to cellulose by polysaccharide:polysaccharide interaction include xyloglucans such as pea xyloglucan and tamarind seed xyloglucan (TXG) (which has a β1-4 linked glucan backbone with side chains of α-D xylopyranose and β-D-galactopyranosyl-(1-2)-α-D-xylo-pyranose, both 1-6 linked to the backbone:see Gidley et al Carbohydrate Research, 214 (1991) 200-314 for a discussion of the structure of tamarind seed polysaccharide); and galactomammans, particularly low galactose galactomannans, such as locust bean gum (LBG) (which has a mannan backbone of β1-4 linked mannose residues, with single unit galactose side chains linked α1-6 to the backbone), enzyme modified guar (EMG) (guar gum has the same structural units as LBG but has a much higher level of galactose substitution, to the extent that there is not enough accessible mannan backbone through which to bind cellulose. EMG is produced by enzymic removal from guar gum of a controllable percentage of the galactose residues to produce a range of materials that are capable of binding to cellulose, but are cheaper and more consistently available than LBG. See Bulpin et al Carbohydrate Polymers 12 (1990) 155-168 for a discussion of EMG), tara glactomannan and cassia galactomannan. These materials are commercially available and thus provide potentially useful sources of suitable polysaccharides. These materials have the advantages of being relatively cheap, and already being accepted for food use.

The polysaccharide desirably has side chain galactose residues susceptible to oxidation by galactose oxidase, for production of an aldehyde group for coupling purposes, as will be described below. TXG, LBG and EMG have such galactose residues.

The particle may be of a range of materials including silica, particular porous silica, organic polymer etc.

The perfume may be carried by the particle in a variety of ways, including absorption, adsorption, impregnation and encapsulation.

Absorption of a perfume by particles can be brought about simply by bringing the perfume and the particles into contact, and allowing them to stand. The perfume molecules can enter the particles by diffusion.

An alternative to the use of solid particles is to form hollow capsules in which a shell encapsulates the perfume.

One approach to the preparation of microcapsules of perfume is to disperse droplets of the perfume in an aqueous phase which contains water soluble polymer, and then form a polymer shell around these perfume droplets by coacervation of the polymer at the interface between the perfume and the aqueous phase. Once formed, the capsule wall usually requires further treatment to strengthen it. The encapsulation of perfume by coacervation has been described by Meyer, A in Chimica, 46, 101 (1992) and in US-A-5051305.

A second approach to the formation of microcapsules of perfume is to disperse perfume droplets in an aqueous phase, and then bring about a polymerisation reaction at the interface between the droplets and the aqueous phase. The polymerisation reaction which has mostly been employed is the formation of an aminoplast resin. This has been used for perfume encapsulation, as disclosed in US-A-4681806. A typical procedure for the production of aminoplast resin capsules enclosing perfume is set out in US-A-4234627, which refers back to US-A-3516941.

A further possibility is to form solid polymer particles, absorb the perfume into these, and then encapsulate these particles.

Further information on encapsulation techniques is given in Risch, S.J., Reineccius, G.A. (Ed), "Encapsulation and controlled release of food ingredients", ACS symposium series 590, Washington DC, 1995. It is to be noted that not all of the encapsulation techniques described in this reference are necessarily suitable for the preparation of particles for use in this invention. For instance, spray drying, which is the most widely used encapsulation technique, generally produces water-soluble particles which may not be particularly suitable. However, the person skilled in the art will readily be able to select suitable techniques.

The perfume typically constitutes between 1 and 90% of the total weight of the particle, and preferably constitutes at least 5% by weight to be commercially attractive. Using encapsulation techniques, perfume loadings of up to about 70% can be achieved, while absorption techniques, eg using highly absorbing silicas, can achieve loadings of up to about 90%.

The nature of the perfume is not critical to the invention. As is well known, a perfume normally consists of a mixture of a number of perfumery materials, each of which has a fragrance. The number of perfumery materials in a perfume is typically ten or more. The range of fragrant materials used in perfumery is very wide; the materials come from a variety of chemical classes, but in general are water-insoluble oils. In many instances, the molecular weight of a perfumery material is in excess of 150, but does not exceed 300.

The perfumes used in the present invention can be mixtures of conventional perfumery materials. Perfumery materials which may be used include: acetyl cedrene, 4-acetoxy-3-pentyltetrahydropyran, 4-acetyl-6-t-butyl-1,1-dimetylindane, available under the trademark "CELESTOLIDE", 5-acetyl-1,1,2,3,3,6-hexamethylindane, available under the trademark "PHANTOLIDE", 6-acetyl-1-isopropyl-2,3,3,5-tetramethylindane, available under the trademark "TRASEOLIDE", alpha-n-amylcinnamic aldehyde, amyl salicylate, aubepine, aubepine nitrile, aurantion, 2-t-butylcyclohexyl acetate, 2-t-butylcyclohexanol, 3-(p-t-butylphenyl)propanal, 4-t-butylcyclohexyl acetate, 4-t-butyl-3,5-dinitro-2,6-dimethyl acetophenone, 4-t-butylcyclohexanol, benzoin siam resinoids, benzyl benzoate, benzyl acetate, benzyl propionate, benzyl salicylate, benzyl isoamyl ether, benzyl alcohol, bergamot oil, bornyl acetate, butyl salicylate, carvacrol, cedar atlas oil, cedryl methyl ether, cedryl acetate, cinnamic alcohol, cinnamyl propionate, cis-3-hexenol, cis-3-hexenyl salicylate, citronella oil, citronellol, citronellonitrile, citronellyl acetate, citronellyloxyacetaldehyde, cloveleaf oil, coumarin, 9-decen-1-ol, n-decanal, n-dodecanal, decanol, decyl acetate, diethyl phthalate, dihydromyrcenol, dihyromyrcenyl formate, dihydromyrcenyl acetate, dihydroterpinyl acetate, dimethylbenzyl carbinyl acetate, dimethylbenzylcarbinol, dimethylheptanol, dimethyloctanol, dimyrcetol, diphenyl oxide, ethyl naphthyl ether, ethyl vanillin, ethylene brassylate, eugenol, florocyclene, geraniol, geranium oil, geranonitrile, geranyl nitrile, geranyl acetate, 1,1,2,4,4,7-hexamethyl-6-acetyl-1,2,3,4-tetrahydronaphthalene, available under the trademark "TONALID", 1,3,4,6,7,8-hexahydro-4,6,6,7,8,8-hexamethylcyclopenta-2-benzopyran, available under the trade mark "GALAXOLIDE", 2-n-heptylcyclopentanone, 3a,4,5,6,7,7a-hexahydro-4,7-methano-1(3)H-inden-6-ylpropionate, available under the trademark "FLOROCYCLENE", 3a-4,5,6,7,7a-hexahydro-4,7-methano-1(3)H-inden-6-ylacetate, available under the trademark "JASMACYCLENE", 4-(4'-hydroxy-4'-methylpentyl)-3-cyclohexenecarbaldehyde, alpha-hexylcinammic aldehyde, heliotropin, Hercolyn D, hexyl aldone, hexyl cinnamic aldehyde, hexyl salicylate, hydroxycitronellal, i-nonyl formate, 3-isocamphylcyclohexanol, 4-isopropylcyclohexanol, 4-isopropylcyclohexyl methanol, indole, ionones, irones, isoamyl salicylate, isobomeol, isobomyl acetate, isobutyl salicylate, isobutylbenzoate, isobutylphenyl acetate, isoeugenol, isolongifolanone, isomethyl ionones, isononanol, isononyl acetate, isopulegol, lavandin oil, lemongrass oil, linalool, linalyl acetate, LRG 201, 1-menthol, 2-methyl-3-(p-isopropylphenyl)propanal, 2-methyl-3-(p-t-butylphenyl)propanal, 3-methyl-2-pentyl-cyclopentanone, 3-methyl-5-phenyl-pentanol, alpha and beta methyl naphthyl ketones, methyl ionones, methyl dihydrojasmonate, methyl naphthyl ether, methyl 4-propyl phenyl ether, Mousse de chene Yugo, Musk ambrette, myrtenol, neroli oil, nonanediol-1,3-diacetate, nonanol, nonanolide-1,4, nopol acetate, 1,2,3,4,5,6,7,8-octahydro-2,3,8,8-tetramethyl-2-acetyl-naphthalene, available under the trademark "ISO-E-SUPER", octanol, Oppoponax resinoid, orange oil, p-t-amylcyclohexanone, p-t-butylmethylhydrocinnamic aldehyde, 2-phenylethanol, 2-phenylethyl acetate, 2-phenylpropanol, 3-phenylpropanol, para-menthan-7-ol, para-t-butylphenyl methyl ether, patchouli oil, pelargene, petitgrain oil, phenoxyethyl isobutyrate, phenylacetaldehyde diethyl acetal, phenylacetaldehyde dimethyl acetal, phenylethyl n-butyl ether, phenylethyl isoamyl ether, phenylethylphenyl acetate, pimento leaf oil, rose-d-oxide, Sandalone, styrallyl acetate, 1,1,4,4-tetramethyl-6-acetyl-7- ethyl-1,2,3,4-tetrahydronaphthalene, available under the trademark "VERSALIDE", 3,3,5-trimethyl hexyl acetate, 3,5,5-trimethylcyclohexanol, terpineol, terpinyl acetate, tetrahydrogeraniol, tetrahydrolinalool, tetrahydromuguol, tetrahydromyrcenol, thyme oil, trichloromethylphenylcarbinyl acetate, tricyclodecenyl acetate, tricylodecenyl propionate, 10-undecen-1-al, gamma undecalactone, 10-undecen-1-ol, undecanol, vanillin, vetiverol, vetiveryl acetate, vetyvert oil, acetate and propionate esters of alcohol in the list above, aromatic nitromusk fragrances, indane musk fragrances, isochroman musk fragrances, macrocyclic ketones, macrolactone musk fragrances, and tetralin musk fragrances.

The perfume may be present in known manner in solvents or diluents, such as ethanol, isopropanol, diethylene glycol monoethyl ether, dipropylene glycol, diethyl phthalate and triethyl citrate.

Perfumes which are used in this invention may, if desired, have deodorant properties, for example, as disclosed in US-A- 4303679, US-A-4663068 and EP-A-545556.

If the particles are solid particles which are impregnated with perfume after manufacture, the absorption of perfume can be enhanced by choosing perfumery materials with a hydrophobic character or mixing a hydrophobic oil into the perfume. Examples of hydrophobic oils which can enhance perfume uptake are dibutylphthalate, alkane mixtures such as isoparaffin and di (C₈-C₁₀ alkyl) propylene glycol diester.

The particles suitably have a diameter in the range 0.5 to 100 microns. The lower end of this range (0.5 to 5 microns) covers small colloidal particles and molecular complexes.

The particle is attached to the polysaccharide by a range of physical or chemical means.

Polysaccharide is conveniently physically attached to particles, eg by adsorption. For example, porous silica particles have surface properties that enable firm adsorption of polysaccharide.

Chemical attachment techniques may also be used. For particles carrying surface amino groups, attachment can be by a number of techniques. For example, amino groups are conveniently chemically linked to polysaccharides having galactose side chains by enzymically oxidising the galactose, eg using galactose oxidase, to produce an aldehyde group to which an amino group of a particle can be chemically linked. As noted above, TXG, LBG and EMG have suitable galactose side chains. For polysaccharides not having suitable galactose side chains, different methods of chemical linking of amino groups can be used. Alternative techniques include limited periodate oxidation, which requires the polysaccharide to have two adjacent hydroxyl groups in cis orientation, and results in the production of aldehyde groups which can be reductively aminated. A further possibility is reaction with cyanogen bromide (CNBr) which inserts into sugar rings at vicinal diols, both in the backbone and side chains, to provide an isourea linkage to amino groups. It is preferred to use chemical techniques that do not affect the polysaccharide backbone length, which would reduce the cellulose-binding capability of the polysaccharide. For particles with surface carboxyl or hydroxyl groups, other known forms of chemical linkage may be used. As a further possibility, where the particle is a liposome or micelle, hydrophobic tails fixed to the polysaccharide can be inserted therein.

Because the polysaccharide conjugate binds to cellulose, which is present in cotton and other fabrics, paper, etc, binding of the conjugate to cellulose brings the attached particle carrying perfume into close proximity to a surface of or containing cellulose. The invention thus enables targeting of perfume-bearing particles to such surfaces.

This targeting function finds particular practical applications, in targeting of particles containing perfume to bind to fabric. The perfume may be adsorbed, impregnated or encapsulated in the particle. Polysaccharide-particle conjugates of this sort thus find use as ingredients in laundry products, such as fabric washing products and fabric conditioning products, and also personal products, eg. for targeting perfume to bind to clothes. Another potential use is in paper products, such as disposable paper wipes.

In a preferred embodiment, the particles are porous and contain perfume in the pores. This embodiment involves filling the pores of the particles with the perfume and then blocking the pores with a coating of the polysaccharide so that the perfume does not come out of the particle again easily. It may, however, be possible to effect perfume release if desirable, eg by ironing. Moreover, the coating has the combined effect of sealing the perfume in the pores and giving the particles a specific affinity for cellulose or cellulose-containing surfaces.

The invention may also be used for targeting perfume-bearing particles to bind paper to produce perfumed paper.

An additional benefit of the invention arises from the fact that, unlike most other targeting molecules, cellulose-binding polysaccharides are especially robust. Proteins such as cellulose binding domain can be inactivated (denatured) by heat or aggressive surfactants, while polysaccharides such as LBG, TXG, etc are completely unaffected by such treatments. The polysaccharide conjugates of the invention thus offer the considerable advantage of extra stability and product compatibility compared with other targeting molecules.

In a further aspect, the present invention provides a product incorporating a polysaccharide conjugate in accordance with the invention.

The product is conveniently a laundry product such as a fabric washing product, eg a detergent product, or a fabric conditioning product.

The invention also finds application in personal products, eg for targeting perfume to bind to clothes.

The product may otherwise be of generally conventional formulation, as is well known to those skilled in the art. For a discussion of known detergent compositions see, for example, WO 95/34628, particularly pages 11 to 15.

The present invention also provides a method of targeting binding of a particle carrying perfume to cellulose by use of a polysaccharide conjugate in accordance with the invention.

The invention will be further described by way of illustration, in the following Example.

### EXAMPLE 1

### Binding of Locust Bean gum (LBG) to fragrance-enriched particles for targeting to fabric.

### MATERIALS AND METHODS

### Preparation of particles

Porous silica particles (mean pore-size 2nm, average particle size 9 µm) were obtained from Joseph Crosfield & Sons (Warrington U.K.). Approximately 25 mgs of silica was placed in each of two round-bottom plastics tubes. 0.5mls of the fragrance florocyclene (obtained from Quest International, Ashford U.K.) was added to each of the tubes and mixed thoroughly. The lids of the tubes were sealed to prevent evaporation of the fragrance.

The two tubes were rotated overnight with a gentle tumbling motion to allow the fragrance molecules to enter the pores of the particles. This was done at ambient temperature.

The tubes were centrifuged for 5 minutes [13,000 r.p.m. in a microcentrifuge (MSE)] and the supematants discarded. Each of the two tubes then received a different treatment in which 1mls of one of the following was added.
a) 1mls of 0.1% LBG (Sigma Product No. G-0753)
b) 1 mls of purified water.

The two tubes were mixed thoroughly and then rotated overnight at ambient temperature. After the overnight treatment, the tubes were centrifuged as before and the supernatants removed. The particles were washed once in water and then twice in saline (pH 7). The particles were then resuspended in 1mls saline (pH 7) and left at ambient temperature until required. There were therefore two different slurries, each containing approximately 25 mgs of silica in 1mls of saline. The slurries were designated a) or b) depending on the treatment received as set out above.

### Targeting the particles to fabric

Two squares (approximately 1cm x 1cm) were cut from white cotton cloth.

2mls of saline was added to each of two plastics tubes. 100 µl of slurry a) was added to one; 100 µl of slurry b) was added to the other. One cotton square was added to each of the two tubes a) and b).

The two tubes were rotated slowly at room temperature for two hours; after which the cotton squares were removed with tweezers. Each square was placed in a separate Petri dish. The lids of the Petri dishes were used to prevent evaporation of the fragrance.

### RESULTS

Eight people were asked to compare cotton squares treated with slurry a) and slurry b) and decide which of the cotton squares smells the strongest.
6 out of 8 said that a) was the strongest
1 out of 8 said that b) was the strongest
1 out of 8 could not tell the difference.

It was concluded that the cotton square treated with slurry a) had more fragrance on it due to the targeting effect of the LBG.

## Claims

1. A polysaccharide conjugate comprising a polysaccharide selected from xyloglucans, glucomannans, mannans, galactomannans, β(1-3), (1-4) glucan and the xylan family incorporating glucurono-, arabino- and glucuronoarabinoxylan, which is chemically or physically attached to a particle carrying perfume, the polysaccharide conjugate being capable of binding to cellulose.

2. A conjugate according to claim 1, wherein the polysaccharide is selected from xyloglucans such as tamarind seed xyloglucan (TXG) and pea xyloglucan; and galactomannans, particularly low galactose galactomannans, such as locust bean gum (LBG), enzyme modified guar (EMG), tara galactomannan and cassia galactomannan.

3. A conjugate according to any one of the preceding claims, wherein the polysaccharide has side chain galactose residues susceptible to oxidation by galactose oxidase.

4. A conjugate according to any one of the preceding claims, wherein the particle is physically linked to the polysaccharide.

5. A product incorporating a polysaccharide conjugate in accordance with any one of the preceding claims.

6. A product according to claim 5, comprising a laundry product such as a fabric washing product, eg a detergent product, or a fabric conditioning product.

7. A method of targeting binding of a particle carrying perfume to cellulose by use of a polysaccharide conjugate in accordance with any one of claims 1 to 4.

## Patentansprüche

1. Polysaccharidkonjugat, umfassend ein Polysaccharid ausgewählt aus Xyloglucanen, Glucomannanen, Mannanen, Galactomannanen, β-(1,3),(1,4)-Glucan und der Xylanfamilie, einschließlich Glucurono-, Arabino- und Glucuronoarabinoxylan, welches chemisch oder physikalisch an ein Parfum tragendes Teilchen gebunden ist, wobei das Polysaccharidkonjugat befähigt ist, an Cellulose zu binden.

2. Konjugat nach Anspruch 1, worin das Polysaccharid ausgewählt ist aus Xyloglucanen, wie Tamarindsamenxyloglucan (TXG) und Erbsenxyloglucan, und Galactomannanen, insbesondere Galactomannanen mit niedrigem Galactosegehalt, wie Johannisbrotgummi (LBG), Enzym modifiziertem Guar (EMG), Taragalactomannan und Cassiagalactomannan.

3. Konjugat nach irgendeinem der vorhergehenden Ansprüche, worin das Polysaccharid Seitenketten-Galactosereste aufweist, die einer Oxidation mit Galactoseoxidase zugänglich sind.

4. Konjugat nach irgendeinem der vorhergehenden Ansprüche, worin das Teilchen an das Polysaccharid physikalisch gebunden ist.

5. Produkt, das ein Polysaccharidkonjugat nach irgendeinem der vorhergehenden Ansprüche einbezieht.

6. Produkt nach Anspruch 5, umfassend ein Waschprodukt, wie ein Gewebe-Waschprodukt, z.B. ein Detergenzprodukt oder ein Gewebe-Konditionierungsprodukt.

7. Verfahren zum zielgerichteten Binden eines Parfum tragenden Teilchens an Cellulose durch Einsatz eines Polysaccharidkonjugats nach irgendeinem der Ansprüche 1 bis 4.

## Revendications

1. Conjugué de polysaccharide comprenant un polysaccharide choisi parmi les xyloglucanes, les glucomannanes, les mannanes, les galactomannanes, le β-(1-3),(1-4)-glucane et la famille des xylanes comprenant le glucuronoxylane, l'arabinoxylane et le glucuronoarabinoxylane, qui est attaché chimiquement ou physiquement à une particule portant un parfum, le conjugué de polysaccharide étant capable de se lier à la cellulose.

2. Conjugué suivant la revendication 1, dans lequel le polysaccharide est choisi parmi les xyloglucanes comme le xyloglucane de graines de tamarinier (TXG) et le xyloglucane de pois ; et les galactomannanes, en particulier les galactomannanes pauvres en galactose, comme la gomme de caroube (LBG), une gomme guar modifiée par une enzyme (EMG), un galactomannane de tara et un galactomannane de casse.

3. Conjugué suivant l'une quelconque des revendications précédentes, dans lequel le polysaccharide porte des résidus galactose sur des chaînes secondaires sensibles à une oxydation par une galactose oxydase.

4. Conjugué suivant l'une quelconque des revendications précédentes, dans lequel la particule est liée physiquement au polysaccharide.

5. Produit incorporant un conjugué de polysaccharide suivant l'une quelconque des revendications précédentes.

6. Produit suivant la revendication 5, comprenant un produit de blanchissage comme un produit de lavage de tissus, par exemple un produit détergent, ou un produit de conditionnement de tissus.

7. Procédé de ciblage de la liaison d'une particule portant un parfum à la cellulose à l'aide d'un conjugué de polysaccharide suivant l'une quelconque des revendications 1 à 4.
